# EUROPÄISCHE PATENTSCHRIFT

(11) **EP 2 477 737 B1**
(45) Veröffentlichungstag und Bekanntmachung des Hinweises auf die Patenterteilung: **30.04.2014**
(21) Anmeldenummer: 10757722.3
(22) Anmeldetag: 04.09.2010
(51) Int. Cl.: B01J 27/26, C08G 65/26, C08G 65/336, C09D 171/02, C09J 171/02

(54) **SILANGRUPPENHALTIGE REAKTIVVERDÜNNER**
REACTIVE DILUENTS CONTAINING SILANE GROUPS
DILUANTS RÉACTIFS CONTENANT DES GROUPES SILANES

(30) Priorität: 18.09.2009 DE 102009042190
(43) Veröffentlichungstag der Anmeldung: 25.07.2012
(73) Patentinhaber: Bayer Intellectual Property GmbH, 40789 Monheim (DE)
(72) Erfinder: MATNER, Mathias, 41464 Neuss (DE); LORENZ, Klaus, 41539 Dormagen (DE); HOFMANN, Jörg, 47800 Krefeld (DE); LUDEWIG, Michael, 51519 Odenthal (DE); SCHMIDT, Axel, 239191 Singepore (SG); KOBELKA, Frank, 51065 Köln (DE)
(74) Vertreter: BIP Patents
(86) Internationale Anmeldenummer: PCT/EP2010/005443
(87) Internationale Veröffentlichungsnummer: WO 2011/032653

(56) Entgegenhaltungen:
- EP-A1- 2 093 244
- EP-A1- 2 194 086
- WO-A1-2005/078036

## Beschreibung

Die vorliegende Erfindung betrifft die Verwendung silangruppenhaltiger Reaktivverdünner und silangruppenhaltiger Reaktivweichmacher für feuchtigkeitshärtende Harze in Beschichtungsmitteln, Kleb- oder Dichtstoffen..

Silanterminierte Polymere werden seit Jahren kommerziell als Rohstoffe für Dicht- und Klebstoffe sowie für Beschichtungsmaterialien genutzt. Meist werden dazu Silikon-, Polyurethan- oder Polyacrylatpolymere mit Hilfe von funktionellen Silanen zu den entsprechenden silanterminierten Polymeren umgesetzt. Nachteilig ist bei diesen Polymeren die vergleichsweise hohe Viskosität, die durch die verwendeten Polymerrückgrate hervorgerufen wird.

Polyether haben gegenüber Polyurethanen und Polyacrylaten eine sehr viel niedrigere Viskosität, was durch die Abwesenheit von funktionellen Gruppen, die intermolekulare Bindungen eingehen können, zu erklären ist. Daher haben auch silanterminierte Polyether gegenüber den oben genannten silanterminierten Polymeren den Vorteil einer geringeren Viskosität.

Silangruppenhaltige Polyether werden beispielsweise in den Publikationen DE-A 1 495 543, US-A 3 971 751, JP-A 54 032 597, JP-A 58 168 623, EP-A 0 397 036 und DE 10 2004 006 531 beschrieben.

Für Beschichtungen, Dicht- und Klebstoffe auf Basis silangruppenhaltiger Polymere gilt jedoch, dass häufig eine weitere Senkung der Viskosität erwünscht ist. Diese wird in vielen Fällen durch den Einsatz von Lösungsmitteln erreicht. Die dadurch entstehenden Nachteile ökologischer, toxikologischer und arbeitshygienischer Art sind hinlänglich bekannt, so dass dieser Weg nur noch eingeschränkt beschritten werden kann. Weiterhin werden in Anwendungen, in denen weiche Beschichtungen, Dicht- oder Klebstoffe benötigt werden, schwerflüchtige, weitgehend inerte, niedermolekulare Substanzen wie beispielsweise Mineralöle, Kohlenwasserstoffharze oder Dialkylphthalate verwendet. Diese wirken sowohl viskositätssenkend als auch weichmachend, besitzen aber auch entscheidende Nachteile. In Abhängigkeit von der jeweiligen Formulierung können sie beispielsweise zum Auswandern aus der ausgehärteten Polymermatrix neigen, was zu Versprödungserscheinungen führen kann oder eine ungewünschte Verschmutzung der angrenzenden Oberflächen (Randzonenverschmutzung) nach sich ziehen kann. Weiterhin können die auswandernden Substanzen in die Grenzschicht zwischen Beschichtung und Substrat wandern und dort die Haftung der Beschichtung auf dem Substrat stören, so dass es zu einer ungewollten Ablösung kommt. Insbesondere sind aber die migrierenden niedermolekularen Substanzen an sich in häufigen Fällen physiologisch nicht völlig unbedenklich. Dialkylphthalaten konnten beispielsweise nachteilige endokrine Wirkungen sowie Reproduktionstoxizität nachgewiesen werden.

Der vorliegenden Erfindung lag daher die Aufgabe zugrunde, effektive Reaktivverdünner und Reaktivweichmacher für silangruppenhaltige feuchtigkeitshärtende Kleb- und Dichtstoffe sowie Beschichtungsharze zu entwickeln, die dem Basissystem eine verbesserte Verarbeitbarkeit bei gutem mechanischen Eigenschaftsniveau des ausreagierten Endproduktes verleihen und sich außerdem durch eine deutlich verringerte Migrationstendenz gegenüber Standardverdünnern/-weichmachern wie beispielsweise Dialkylphthalaten auszeichnen.

Eine weitere Aufgabe der vorliegenden Erfindung war die Bereitstellung eines einfachen Verfahrens zur Herstellung der effektiven Reaktivverdünner/Reaktivweichmacher.

Effektive Reaktivverdünner/Reaktivweichmacher für silangruppenhaltige, feuchtigkeitshärtende Beschichtungssysteme sind bisher nicht bekannt.

Überraschenderweise wurde gefunden, dass sich hocheffektive Reaktivverdünner/Reaktivweichmacher für silangruppenhaltige feuchtigkeitshärtende Beschichtungsharze und Dichtstoffe durch Copolymerisation von Alkylenoxiden und silangruppenhaltigen Epoxiden in Gegenwart monofunktioneller Startermoleküle in einem einfachen Einstufenprozess erhalten lassen.

Gegenstand der vorliegenden Erfindung ist daher die Verwendung von Mischungen enthaltend Verbindungen der allgemeinen Strukturen I, II, III und IV 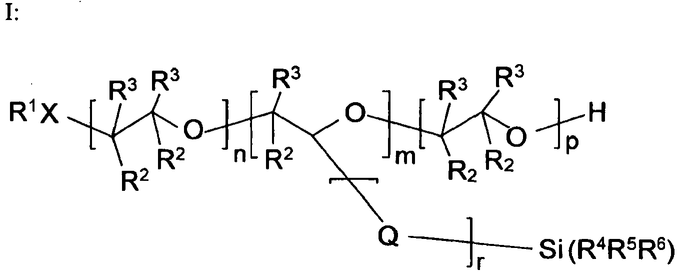 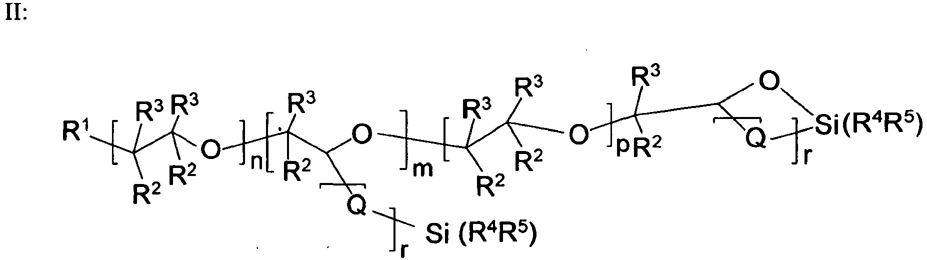 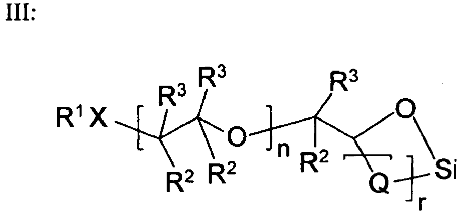 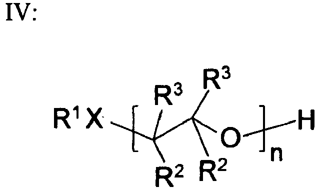 wobei
a) R¹ ein monofunktionelles Startermolekülradikal wie beispielsweise Methyl, Ethyl, Propyl, Butyl, Cyclohexyl, Phenyl und X ein Heteroatom, bevorzugt Sauerstoff, repräsentiert und das Wasserstoffatom in R¹XH ein Zerewitinoffaktives Wasserstoffatom ist,
b) R² und R³ unabhängig voneinander für Wasserstoff, für einen C₁-C₄-Alkylrest oder für einen Phenylrest stehen, wobei Wasserstoffatome und/oder Methylgruppen bevorzugt sind und an ein C-Atom gebundene Gruppen R² und R³ gleich oder voneinander verschieden sein können,
c) [Q]ᵣ eine aus Sauerstoff- und Kohlenstoffatomen aufgebaute Kette der Länge r, wobei r die Summe der Kohlenstoff- und Sauerstoffatome ist, repräsentiert, wobei etwaige freie Valenzen mit Wasserstoffatomen oder Alkylresten abgesättigt sind, aneinander gebundene Sauerstoffatome (Peroxidstrukturen) nicht vorkommen, Silizium an die Kette [Q]ᵣ immer über Kohlenstoff gebunden ist, die Kette [Q]ᵣ auch vollkommen sauerstofffrei aufgebaut sein kann und r Werte zwischen 1 und 20 annehmen kann,
d) R⁴, R⁵ und R⁶ entweder Alkyl oder O-Alkyl repräsentieren unter der Voraussetzung, dass in den Strukturen I und II mindestens einer der an das nichtcyclisch gebundenen Si-Atome Reste R⁴, R⁵ und R⁶ die Bedeutung O-Alkyl hat und in den Strukturen II und III mindestens einer der Reste R⁴ und R⁵ des in der cyclischen Endgruppe gebundenen Si-Atoms O-Alkyl ist,
e) p + n in der Struktur I Werte zwischen 5 und 300 und m Werte zwischen 1 und 5 annehmen kann, wobei die m siliziumgruppentragenden Monomereinheiten statistisch zwischen den p + n siliziumgruppenfreien Monomereinheiten verteilt sind,
f) p + n in der Struktur II Werte zwischen 5 und 300 und m Werte zwischen 1 und 5 annehmen kann, wobei die m Monomereinheiten mit nichtcyclisch gebundenen Si-Atomen statistisch zwischen den p + n siliziumgruppenfreien Monomereinheiten verteilt sind,
g) n in den Strukturen III und IV Werte zwischen 5 und 300 annehmen kann und
h) die Strukturen I, II und III jeweils zu mindestens 10 Gew.-% in der Mischung vorliegen, als Reaktivverdünner oder Reaktivweichmacher in Beschichtungsmitteln, Kleb- oder Dichtstoffen.

Diese Mischungen können durch ein Verfahren erhalten werden, in welchem
auf monofunktionelle Startermoleküle R¹XH, bei denen ein an X mit der Bedeutung Schwefel oder Sauerstoff, bevorzugt Sauerstoff, gebundenes Zerewitinoffaktives Wasserstoffatom pro Startermolekül,

Alkylenoxide mit folgenden allgemeinen Strukturen 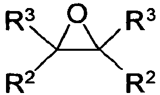 wobei R² und R³ unabhängig voneinander Wasserstoff, einen C₁-C₄-Alkylrest oder einen Phenylrest repräsentieren, wobei Wasserstoffatome und/oder Methylgruppen bevorzugt sind und an ein C-Atom gebundene Gruppen R² und R³ gleich oder voneinander verschieden sein können,
gemeinsam mit silangruppenhaltigen Epoxiden, die folgende allgemeine Strukturen aufweisen 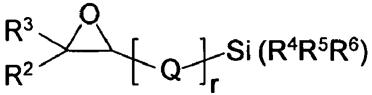 wobei R² und R³ unabhängig voneinander Wasserstoff, einen C₁-C₄-Alkylrest oder einen Phenylrest repräsentieren, wobei Wasserstoffatome und/oder Methylgruppen bevorzugt sind und an ein C-Atom gebundene Gruppen R² und R³ gleich oder voneinander verschieden sein können,
[Q]ᵣ eine aus Sauerstoff- und Kohlenstoffatomen aufgebaute Kette der Länge r, mit r = Summe der Kohlenstoff- und Sauerstoffatome, repräsentiert, wobei etwaige freie Valenzen mit Wasserstoffatomen oder Alkylresten abgesättigt sind, aneinander gebundene Sauerstoffatome (Peroxidstrukturen) nicht vorkommen, Silizium an die Kette [Q]ᵣ immer über Kohlenstoff gebunden ist, die Kette [Q]ᵣ auch vollkommen sauerstofffrei aufgebaut sein kann und r Werte zwischen 1 und 20 annehmen kann,
R⁴, R⁵ und R⁶ entweder Alkyl oder O-Alkyl ist unter der Voraussetzung, dass mindestens einer der Reste R⁴, R⁵ und R⁶ die Bedeutung O-Alkyl haben,
unter Verwendung eines oder mehrerer Katalysatoren aufpolymerisiert werden.

Als Katalysatoren können dabei Verbindungen eingesetzt werden, die die ataktische Polymerisation racemischer Gemische von 1-Alkylepoxiden katalysieren.

Als Katalysator kann eine Doppelmetallcyanidverbindung eingesetzt werden, die die ataktische Polymerisation racemischer Gemische von 1-Alkylepoxiden katalysiert.

Die Reaktionstemperatur kann im Bereich von 60 °C bis 170 °C liegen, vorzugsweise im Bereich von 130 °C bis 170 °C liegt.

Als Katalysatoren werden bevorzugt sogenannte Doppelmetallcyanid-Katalysatoren (DMC-Katalysatoren) verwendet, von denen seit langem bekannt ist, dass sie zur kommerziellen Herstellung von Polyetherpolyolen durch Ringöffüngspolymerisation von Alkylenoxiden in Anwesenheit geeigneter Starterverbindungen geeignet sind, und dass das dabei als Alkylenoxid bevorzugt eingesetzte racemische Propylenoxid ataktisch polymerisiert wird. Als Folge dessen sind die durch DMC-Katalyse hergestellten Polypropylenglykole amorphe, flüssige Produkte mit relativ niedriger Viskosität.

Die für das Verfahren zur Herstellung der erfindungsgemäß verwendeten Reaktivverdünner oder Reaktivweichmacher geeigneten DMC-Katalysatoren sind im Prinzip bekannt und ausführlich beschrieben im Stand der Technik. Bevorzugt eingesetzt werden hochaktive DMC-Katalysatoren, die z.B. beschrieben sind in US-A 5 470 813, EP-A 0 700 949, EP-A 0 743 093, EP-A 0 761 708, WO1997/040 086, WO1998/016310 und WO2000/047 649. Ein typisches Beispiel sind die in EP-A 0 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit zahlenmittlerem Molekulargewicht größer als 500 g/mol enthalten.

Es können auch basische Katalysatoren wie beispielsweise Alkalimetallhydroxide, Alkalimetallhydride, Alkalimetallcarboxylate, Erdalkalihydroxide oder Amine verwendet werden, da diese racemisches Propylenoxid ebenfalls ataktisch polymerisieren. Nachteilig bei diesen Katalysatoren ist ihre Basizität, welche die Aushärtung der silangruppenhaltigen Beschichtungsharze unter Feuchtigkeitseinwirkung in Fällen, in denen die Aushärtung säurekatalysiert erfolgen soll, behindern kann. Daher ist im Allgemeinen die Abtrennung basischer Katalysatorspuren durch Aufarbeitungsschritte vonnöten, beispielsweise durch Ionenaustauschverfahren.

Als Startermoleküle werden vorzugsweise Verbindungen mit Molekulargewichten von 32 bis 10000 und einem Zerewitinoff-aktiven Wasserstoffatom pro Molekül verwendet. Beispielhaft seien genannt: Methanol, Ethanol, Butanol, Butyldiglykol, 2-Ethylhexanol, Oleylalkohol, Stearylalkohol, Phenol, Naphtol und Mercaptoethanol.

An N, O oder S gebundener Wasserstoff wird als Zerewitinoff-aktiver Wasserstoff (manchmal auch nur als "aktiver Wasserstoff") bezeichnet, wenn er nach einem von Zerewitinoff aufgefundenen Verfahren durch Umsetzung mit Methylmagnesiumjodid Methan liefert. Typische Beispiele für Verbindungen mit Zerewitinoff-aktivem Wasserstoff sind Verbindungen, die Carboxyl-, Hydroxyl-, Amino-, Imino- oder Thiol-Gruppen als funktionelle Gruppen enthalten

Als Alkylenoxide werden können beispielsweise Ethylenoxid, Propylenoxid, Butylenoxid, Styroloxid oder Isobutylenoxid eingesetzt werden. Besonders bevorzugt werden Ethylenoxid, Propylenoxid oder Butylenoxid verwendet. Die Epoxide können einzeln als Einzelstoffe, nacheinander oder im Gemisch dosiert werden. Werden verschiedene Epoxide nacheinander dosiert, werden Polyetherketten mit Blockstrukturen erhalten. Bei gemischter Dosierung resultieren Mischblockstrukturen.

Als Verbindungen, die wenigstens eine Epoxygruppe und wenigstens ein hydrolysierbare Reste tragendes Siliziumatom aufweisen, können beispielsweise 3-(Glycidoxypropyl)-trimethoxysilan, 3-(Glycidoxypropyl)triethoxysilan, 3-(Glycidoxypropyl)methyldimethoxysilan oder 3-(Glycidoxypropyl)methyldiethoxysilan oder die entsprechenden α-Verbindungen 3-(Glycidoxymethyl)trimethoxysilan, 3-(Glycidoxymethyl)triethoxysilan, 3-(Glycidoxymethyl)methyldimethoxysilan oder 3-(Glycidoxymethyl)methyldiethoxysilan verwendet werden. Die wenigstens eine Epoxygruppe und wenigstens ein hydrolysierbare Reste tragendes Siliziumatom aufweisenden Verbindungen können einzeln oder als Gemische verwendet werden. Bevorzugt sind 3-(Glycidoxypropyl)trimethoxysilan und / oder 3-(Glycidoxypropyl)triethoxysilan. Im Folgenden werden diese Verbindungen als Epoxysilan bezeichnet.

Im Einzelnen kann das Verfahren nach folgenden Verfahrensvarianten A), B), C) durchgeführt werden:
A) Die ein Zerewitinoff-aktives Wasserstoffatom pro Molekül enthaltende Starterverbindung, im Folgenden "Starter" genannt, wird im Reaktor vorgelegt. Werden als Katalysatoren die bevorzugt einzusetzenden DMC-Verbindungen verwendet, sollte die OH-Zahl des Starters Werte von 600 mg KOH / g nicht überschreiten. Um auch Starter mit höherer OH-Zahl einem solchen Verfahren zugänglich zu machen, können aus diesen beispielsweise mittels basischer Katalyse durch Alkylenoxidaddition zunächst Vorpolymerisate mit entsprechend reduzierter OH-Zahl hergestellt werden, die, nach sorgfältiger Abtrennung basischer Katalysatorspuren, in dem Verfahren eingesetzt werden können. Es können auch Gemische aus 2 und mehr Startern verwendet werden.
   Den Startern wird nun der Alkylenoxidadditionskatalysator, bevorzugt eine DMC-Verbindung, zugesetzt. Werden basische Katalysatoren wie beispielsweise Alkalimetallhydroxide, Alkalimetallhydride, Alkalimetallcarboxylate, Erdalkalihydroxide oder Amine verwendet, wird empfohlen, das Reaktionsgemisch durch Evakuieren und / oder Strippen mit Inertgas von Wasser zu befreien. Auch beim Einsatz von DMC-Katalysatoren sollte vor Beginn der Epoxiddosierung ein Strippschritt bei Reaktionstemperatur, mindestens jedoch bei 60 °C erfolgen. Die einzusetzenden Katalysatormengen variieren im Falle der bevorzugt zu verwendenden DMC-Katalysatoren zwischen 10 und 1000 ppm. Bevorzugt werden DMC-Katalysatormengen zwischen 10 und 300 ppm eingesetzt. Basische Katalysatoren werden im Allgemeinen in größeren Konzentrationen von 100 bis 10.000 ppm eingesetzt. Diese Katalysatorkonzentrationsangaben beziehen sich auf die Gesamtmasse an Endprodukt im jeweiligen Ansatz. Die Reaktionstemperaturen bewegen sich zwischen 50 °C und 170 °C, bevorzugt zwischen 70 °C bis 160 °C, besonders bevorzugt zwischen 85 °C und 160 °C und ganz besonders bevorzugt zwischen 110 °C und 160 °C. Während der Epoxiddosierphase können die Reaktionstemperaturen auch in den angegebenen Bereichen variiert werden.
   Das (die) Alkylenoxid(e) werden nun gemeinsam mit dem (den) Epoxysilan(en) auf den oder die Starter aufpolymerisiert. Hierzu werden das (die) Alkylenoxide und das (die) Epoxysilan(e) so in den Reaktor dosiert, dass die sicherheitstechnischen Druckgrenzen des Systems nicht überschritten werden. Im Falle der bevorzugt einzusetzenden DMC-Katalysatoren kann es erforderlich sein, den Katalysator durch Dosierung einer kleinen Menge Epoxid (2 bis 10 Gew.-% bezogen auf die zu Beginn im Reaktor befindliche Masse) zu aktivieren. Die Aktivierung eines DMC-Katalysators macht sich im Allgemeinen durch einen auf einen anfänglichen Druckanstieg folgenden beschleunigten Druckabfall bemerkbar. In der Hauptdosierphase können die Epoxide im Gemisch untereinander oder auch im Gemisch mit den Epoxysilanen dosiert werden, es ist aber auch möglich die Epoxide nacheinander und / oder auch zeitlich getrennt von den Epoxysilanen zu dosieren. Je nach Dosierstrategie erhält man Polyetherketten mit statistisch über die Konturlänge verteilten Monomerbausteinen oder Polyetherketten mit Blockstrukturen. Bevorzugt wird am Ende der Dosierphase reines Epoxid oder Epoxidgemisch ohne Epoxysilan dosiert, um eine vollständige Umsetzung des Epoxysilans sicherzustellen. Das Verhältnis von Zerewitinoff-aktive Wasserstoffatome enthaltenden Startern zu Epoxiden und Epoxysilanen kann in weiten Grenzen variiert werden. Mögliche Bereiche sind von 0,03 bis 5 mol, bevorzugt 0,03 bis 1 mol und besonders bevorzugt von 0,03 bis 0,25 mol Zerewitinoff-aktiven Wasserstoffatomen pro kg Produkt. Auch das Verhältnis von Epoxysilan zu Zerewitinoff-aktiven Wasserstoffatomen kann breit varriert werden. Typische Verhältnisse liegen in Bereichen von 0,5 bis 5 mol Epoxysilan pro mol Zerewitinoff-aktive Wasserstoffatome, bevorzugt sind Verhältnisse zwischen 0,5 bis 2 mol Epoxysilan pro mol Zerewitinoff-aktive Wasserstoffatome.
   Nach Ende der Epoxiddosierphase bzw. der Dosierphase von Epoxid und Epoxysilan schließt sich üblicherweise eine Nachreaktionsphase an, in der noch nicht umgesetzte Epoxygruppen abreagieren können.
B) Sollen in DMC-katalysierten Prozessen Starter mit OH-Zahlen höher als 600 mg KOH eingesetzt werden, bietet sich neben der oben erwähnten Vorverlängerung des Starters als Verfahrensvariante auch das sogenannte kontinuierliche Starterzudosierungsverfahren an, welches in WO 1997/29146 offenbart ist. Hierbei wird der Starter im Reaktor nicht vorgelegt, sondern neben dem (den) Alkylenoxid(en) und dem (den) Epoxysilan(en) dem Reaktor während der Reaktion kontinuierlich zugeführt. Als Startmedium für die Reaktion können in diesem Verfahren Vorpolymerisate, die durch Epoxidaddition an ein Zerewitinoff-aktives Wasserstoffatom pro Molekül enthaltende Starterverbindungen erhalten wurden, vorgelegt werden, besonders vorteilhaft ist die Verwendung kleiner Mengen des herzustellenden Produktes selbst. Das als Startmedium vorzulegende (Vor)Produkt wird vor Start der Dosierungen mit DMC-Katalysatormengen wie oben geschildert versetzt und sollte eine rechnerische OH-Zahl von 5 bis 600 mg KOH/g besitzen. Die als Startmedium vorteilhaft zu verwendende (Vor)Produktmenge hängt von der jeweiligen Reaktor- und Rührergeometrie sowie der Auslegung der Heiz- und Kühlvorrichtung ab. Sie ist so zu wählen, dass das Reaktionsgemisch gut zu rühren ist, außerdem sollte die Reaktionswärme leicht abführbar, bzw. der Reaktorinhalt leicht aufheizbar sein. In dieser Verfahrensvariante wird die Starterdosierung üblicherweise vor Ende der Epoxid- und Epoxysilandosierung beendet, um an alle Starterverbindungen in ausreichender Menge Epoxid bzw. Epoxysilan addieren zu können und somit einheitliche Produkte zu erhalten. Natürlich kann nach Ende der Starterzudosierungsphase auch die Zusammensetzung des Epoxid / Epoxysilan - Gemisches verädert werden, womit auch nach dieser Verfahrensvariante Polyetherketten mit Blockstrukturen zugänglich sind.
C) Die erfindungsgemäß verwendeten Reaktivverdünner/Reaktivweichmacher können auch vollkontinuierlich nach einem Verfahren, wie es in WO1998/003 571 für die Polyetherherstellung beschrieben ist, hergestellt werden. Hierbei werden neben Epoxid, Epoxysilan und Starter(gemisch) auch der DMC-Katalysator dem Reaktor unter Alkoxylierungsbedingungen kontinuierlich zugeführt und das Produkt kontinuierlich nach einer vorwählbaren mittleren Reaktorverweilzeit entnommen. Polyetherketten mit Blockstrukturen können in dieser Verfahrensvariante nur mittels Verwendung von Reaktorkaskaden erhalten werden.

Die erfindungsgemäße Verwendung der Reaktivverdünner/Reaktivweichmacher für silangruppenhaltige feuchtigkeitshärtende Harze kann in vielfältiger und vorteilhafter Weise in Beschichtungs-, Dicht- und Klebstoffsystemen erfolgen. Hierzu werden die erfindungsgemäßen Reaktivverdünner/Reaktivweichmacher mit silangruppenhaltigen feuchtigkeitshärtenden Harzen und mit den dabei üblichen Füllstoffen, Pigmenten, Weichmachern, Trockenmitteln, Additiven, Lichtschutzmitteln, Antioxidantien, Thixotropiermitteln, Katalysatoren, Haftvermittlern und gegebenenfalls weiteren Hilfs- und Zusatzstoffen nach bekannten Verfahren formuliert. Als geeignete Harze einsetzbar sind Polymere auf Basis von Polysiloxanen, Polyethern, Polyurethanen, Polyacrylaten oder sonstige Polymere, die feuchtigkeitsreaktive Silangruppen aufweisen. Als geeignete Füllstoffe einsetzbar sind gefällte oder gemahlene Kreiden, Metalloxide, -sulfate, -silicate, -hydroxide, -carbonate und -hydrogencarbonate. Weitere Füllstoffe sind z.B. verstärkende und nichtverstärkende Füllstoffe wie Ruß, Fällungskieselsäuren, pyrogene Kieselsäuren, Quarzmehl oder diverse Fasern. Die Füllstoffe können gegebenenfalls oberflächenmodifiziert sein. Besonders bevorzugt einsetzbar sind gefällte oder gemahlene Kreiden sowie pyrogene Kieselsäuren. Auch Gemische von Füllstoffen können eingesetzt werden.

Als geeignete Weichmacher seien beispielhaft Phthalsäureester, Adipinsäureester, Alkylsulfonsäureester des Phenols oder Phosphorsäureester genannt. Auch langkettige Kohlenwasserstoffe, Polyether und pflanzliche Öle können als Weichmacher verwendet werden.

Als Thixotropiermittel seien beispielhaft pyrogene Kieselsäuren, Polyamide, hydrierte Rizinusöl-Folgeprodukte oder auch Polyvinylchlorid genannt.

Als geeignete Katalysatoren zur Aushärtung können alle metallorganischen Verbindungen und aminische Katalysatoren eingesetzt werden, die bekanntermaßen die Silanpolykondensation fördern. Besonders geeignete metallorganische Verbindungen sind insbesondere Verbindungen des Zinns und des Titans. Bevorzugte Zinnverbindungen sind beispielsweise: Dibutylzinndiacetat, Dibutylzinndilaurat, Dioctylzinnmaleat und Zinncarboxylate wie beispielsweise Zinn(II)octoat oder Dibutylzinn-bis-acetoacetonat. Die genannten Zinnkatalysatoren können gegebenenfalls in Kombination mit aminischen Katalysatoren wie Aminosilanen oder 1,4-Diazabicyclo[2.2.2]octan verwendet werden. Bevorzugte Titanverbindungen sind beispielsweise Alkyltitanate, wie Diisobutylbisaceteesigsäureethylester-titanat. Für die alleinige Verwendung von aminischen Katalysatoren sind insbesondere solche geeignet, die eine besonders hohe Basenstärke aufweisen, wie Amine mit Amidin-Struktur. Bevorzugte aminische Katalysatoren sind daher beispielsweise 1,8-Diazabicyclo[5.4.0]undec-7-en oder 1,5-Diazabicyclo[4.3.0]non5-en. Weiterhin können auch protische Säuren wie beispeilsweise p-Toluolsulfonsäure, Dodecylbenzolsulfonsäure oder andere mit der jeweiligen Formulierung verträgliche Brønstedtsäuren eingesetzt werden. Auch eine Kombination verschiedener Katalysatoren ist möglich.

Als Trockenmittel seien insbesondere Alkoxysilylverbindungen genannt wie Vinyltrimethoxysilan, Methyltrimethoxysilan, i-Butyltrimethoxysilan, Hexadecyltrimethoxysilan oder andere niedermolekulare Silanverbindungen. Auch hochreaktive Isocyanate wie beispielsweise 4-Toluensulfonylisocyanat können als Trockenmittel eingesetzt werden.

Als Haftvermittler können die bekannten Silane eingesetzt werden wie beispielsweise Aminosilane wie Aminopropyltrimethoxysilan, Aminopropylmethyl-dimethoxysilan, Aminopropylmethyldiethoxysilan, Aminopropylmethyldiethoxysilan, *N*-Butyl-aminopropyltrimethoxysilan, *N*-Ethyl-aminopropyltrimethoxysilan aber auch N-Aminoethyl-3-aminopropyl-trimethoxy und/oder N-Aminoethyl-3-aminopropyl-methyl-dimethoxy-silan, Chlorpropyltrimethoxysilan, Epoxysilane wie oben genannt und/oder Mercaptosilane wie Mercaptopropyltrimethoxysilan, Mercaptopropylmethyldimethoxysilan, Mercaptopropyltriethoxysilan oder Mercaptopropylmethyldiethoxysilan.

Weiterhin können die Beschichtungs-, Dicht- und Klebstoffsystemen mit verschiedenen Additiven formuliert werden. Diese sind teilweise spezifisch auf die jeweils verwendeten Harze abgestimmt und dem Fachmann bekannt.

Beschichtungs-, Dicht- und Klebstoffsysteme auf Basis silangruppenhaltiger feuchtigkeitshärtender Harze können durch die erfindungsgemäße Verwendung der Reaktivverdünner/Reaktivweichmacher eine niedrigere, applikationsgerechte Viskosität erreichen und/oder im ausgehärteten Zustand eine niedrigere Härte und/oder höhere Dehnbarkeit aufweisen. Durch die erfindungsgemäße Verwendung der Reaktivverdünner/Reaktivweichmacher lassen sich Beschichtungs-, Dicht- und Klebstoffsysteme formulieren, die gegenüber den üblichen Lösungsmitteln und Weichmachern die Vorteile des geringeren Volumenschrumpfs, der geringeren Migration und des geringeren ökotoxischen Potentials aufweisen. Dadurch können weitere Vorteile wie eine verbesserte Haftung, eine verringerte Randzonenverschmutzung oder eine bessere Überlackierbarkeit entstehen.

### Beispiele

### Verwendete Rohstoffe

- **IRGANOX^{®} 1076:**: Octadecyl-3-(3,5-di-tert.butyl-4-hydroxyphenyl)propionat (Bayer MaterialScience AG, Leverkusen. DE)
- **Butyldiglykol:**: Diethylenglykolmonobutylether

### Beispiel 1

Zu 242,9 g Butyldiglykol wurden in einen 10-1 Laborautoklaven 0,023 g einer 85 gew.- %igen Phosphorsäure gegeben und 20 min. bei Raumtemperatur verrührt. Danach wurden 1,229 g DMC-Katalysator zugegeben und der Reaktorinhalt bei 80 °C und Rühren mit 450 U/min. 30 min. unter Einleiten von 50 ml Stickstoff pro min. gestrippt. Unter Rühren (450 U/min) wurde auf 130 °C aufgeheizt und der DMC-Katalysator durch Zugabe von 10 g Propylenoxid aktiviert, was sich, nach einem Druckanstieg von 50 mbar auf 1,12 bar, durch einen beschleunigten Druckabfall erkennen ließ. Nach Dosierung weiterer 300 g Propylenoxid (Dosierrate: 872,6 g / h) wurde die Reaktionstemperatur auf 85 °C gesenkt und die Co-Dosierung von 416,8 g 3-(Glycidoxypropyl)-triethoxysilan gestartet. Diese wurden gemeinsam mit dem restlichen Propylenoxid (5030,2 g) so eindosiert, dass gegen Ende noch 885 g Propylenoxid ohne Paralleldosierung von 3-(Glycidoxypropyl)triethoxysilan eindosiert wurden. Nach einer Nachreaktionszeit von 2 h wurde der Reaktorinhalt 30 min. bei 85 °C im Vakuum (10 mbar) ausgeheizt, woraufhin 3.013 g IRGANOX^{®} 1076 zugegeben wurden. Das Produkt wies eine Viskosität von 640 mPas bei 25 °C auf.

### Beispiel 2

Zu 242,8 g Butyldiglykol wurden in einen 10-1 Laborautoklaven 0,029 g einer 85 gew.- %igen Phosphorsäure gegeben und 20 min. bei Raumtemperatur verrührt. Danach wurden 1,216 g DMC-Katalysator zugegeben und der Reaktorinhalt bei 80 °C und Rühren mit 450 U/min. 30 min. unter Einleiten von 50 ml Stickstoff pro min. gestrippt. Unter Rühren (450 U/min) wurde auf 130 °C aufgeheizt und der DMC-Katalysator durch Zugabe von 10 g Propylenoxid aktiviert, was sich, nach einem Druckanstieg von 50 mbar auf 0,89 bar, durch einen beschleunigten Druckabfall erkennen ließ. Nach Dosierung weiterer 300 g Propylenoxid (Dosierrate: 853,6 g / h) wurde die Reaktionstemperatur auf 85 °C gesenkt und die Co-Dosierung von 353,8 g 3-(Glycidoxypropyl)trimethoxysilan gestartet. Diese wurden gemeinsam mit dem restlichen Propylenoxid (5093,2 g) so eindosiert, dass gegen Ende noch 870 g Propylenoxid ohne Paralleldosierung von 3-(Glycidoxypropyl)trimethoxysilan eindosiert wurden. Nach einer Nachreaktionszeit von 2 h wurde der Reaktorinhalt 30 min. bei 85 °C im Vakuum (10 mbar) ausgeheizt, woraufhin 3.001 g IRGANOX^{®} 1076 zugegeben wurden. Das Produkt wies eine Viskosität von 520 mPas bei 25 °C auf.

### Beispiel 3

Zu 121,4 g Butyldiglykol wurden in einen 10-1 Laborautoklaven 0,011 g einer 85 gew.- %igen Phosphorsäure gegeben und 20 min. bei Raumtemperatur verrührt. Danach wurden 1,200 g DMC-Katalysator zugegeben und der Reaktorinhalt bei 80 °C und Rühren mit 450 U/min. 30 min. unter Einleiten von 50 ml Stickstoff pro min. gestrippt. Unter Rühren (450 U/min) wurde auf 130 °C aufgeheizt und der DMC-Katalysator durch Zugabe von 10 g Propylenoxid aktiviert, was sich, nach einem Druckanstieg von 50 mbar auf 0,91 bar, durch einen beschleunigten Druckabfall erkennen ließ. Nach Dosierung weiterer 300 g Propylenoxid (Dosierrate: 776,9 g / h) wurde die Reaktionstemperatur auf 85 °C gesenkt und die Co-Dosierung von 417,0 g 3-(Glycidoxypropyl)triethoxysilan gestartet. Diese wurden gemeinsam mit dem restlichen Propylenoxid (5151,6 g) so eindosiert, dass gegen Ende noch 882 g Propylenoxid ohne Paralleldosierung von 3-(Glycidoxypropyl)triethoxysilan eindosiert wurden. Nach einer Nachreaktionszeit von 2 h wurde der Reaktorinhalt 30 min. bei 85 °C im Vakuum (10 mbar) ausgeheizt, woraufhin 3.014 g IRGANOX^{®} 1076 zugegeben wurden. Das Produkt wies eine Viskosität von 2960 mPas bei 25 °C auf.

### Beispiel 4

Zu 242,8 g Butyldiglykol wurden in einen 10-1 Laborautoklaven 0,013 g einer 85 gew.- %igen Phosphorsäure gegeben und 20 min. bei Raumtemperatur verrührt. Danach wurden 0,313 g DMC-Katalysator zugegeben und der Reaktorinhalt bei 80 °C und Rühren mit 450 U/min. 30 min. unter Einleiten von 50 ml Stickstoff pro min. gestrippt. Unter Rühren (450 U/min) wurde auf 130 °C aufgeheizt und der DMC-Katalysator durch Zugabe von 10 g Propylenoxid aktiviert, was sich, nach einem Druckanstieg von 50 mbar auf 0,98 bar, durch einen beschleunigten Druckabfall erkennen ließ. Nach Dosierung weiterer 300 g Propylenoxid (Dosierrate: 872,6 g / h) wurde die Reaktionstemperatur auf 85 °C gesenkt und die Co-Dosierung von 416,8 g 3-(Glycidoxypropyl)triethoxysilan gestartet. Diese wurden gemeinsam mit dem restlichen Propylenoxid (5030,2 g) so eindosiert, dass gegen Ende noch 848 g Propylenoxid ohne Paralleldosierung von 3-(Glycidoxypropyl)triethoxysilan eindosiert wurden. Nach einer Nachreaktionszeit von 4,62 h wurde der Reaktorinhalt 30 min. bei 85 °C im Vakuum (10 mbar) ausgeheizt, woraufhin 3.053 g IRGANOX^{®} 1076 zugegeben wurden. Das Produkt wies eine Viskosität von 1150 mPas bei 25 °C auf.

### Beispiel 5

Zu 242,8 g Butyldiglykol wurden in einen 10-1 Laborautoklaven 0,026 g einer 85 gew.- %igen Phosphorsäure gegeben und 20 min. bei Raumtemperatur verrührt. Danach wurden 1,202 g DMC-Katalysator zugegeben und der Reaktorinhalt bei 80 °C und Rühren mit 450 U/min. 30 min. unter Einleiten von 50 ml Stickstoff pro min. gestrippt. Unter Rühren (450 U/min) wurde auf 130 °C aufgeheizt und der DMC-Katalysator durch Zugabe von 10 g Propylenoxid aktiviert, was sich, nach einem Druckanstieg von 50 mbar auf 1,12 bar, durch einen beschleunigten Druckabfall erkennen ließ. Gegen Ende der Dosierung weiterer 2660.1 g Propylenoxid (Dosierrate: 1064 g / h) wurde die Reaktionstemperatur auf 85 °C gesenkt, die Propylenoxiddosierrate auf 899 g / h reduziert und die Co-Dosierung von 416,8 g 3-(Glycidoxypropyl)triethoxysilan gestartet. Diese wurden gemeinsam mit dem restlichen Propylenoxid (2670,1 g) so eindosiert, dass gegen Ende noch 858 g Propylenoxid ohne Paralleldosierung von 3-(Glycidoxypropyl)triethoxysilan eindosiert wurden. Nach einer Nachreaktionszeit von 2 h wurde der Reaktorinhalt 30 min. bei 85 °C im Vakuum (10 mbar) ausgeheizt, woraufhin 3.105 g IRGANOX^{®} 1076 zugegeben wurden. Das Produkt wies eine Viskosität von 675 mPas bei 25 °C auf.

### Beispiel 6

Zu 242,9 g Butyldiglykol wurden in einen 10-1 Laborautoklaven 0,028 g einer 85 gew.- %igen Phosphorsäure gegeben und 20 min. bei Raumtemperatur verrührt. Danach wurden 1,237 g DMC-Katalysator zugegeben und der Reaktorinhalt bei 80 °C und Rühren mit 450 U/min. 30 min. unter Einleiten von 50 ml Stickstoff pro min. gestrippt. Unter Rühren (450 U/min) wurde auf 130 °C aufgeheizt und der DMC-Katalysator durch Zugabe von 10 g eines 1:1 - Gemisches aus Propylenoxid und Ethylenoxid aktiviert, was sich, nach einem Druckanstieg von 50 mbar auf 1,21 bar, durch einen beschleunigten Druckabfall erkennen ließ. Nach Dosierung weiterer 300 g des 1:1 - Gemisches aus Propylenoxid und Ethylenoxid (Dosierrate: 871,4 g /h) wurde die Reaktionstemperatur auf 85 °C gesenkt und die Co-Dosierung von 416,8 g 3-(Glycidoxypropyl)triethoxysilan gestartet. Diese wurden gemeinsam mit dem restlichen Propylenoxid- / Ethylenoxidgemisch (5022,9 g) so eindosiert, dass gegen Ende noch 947 g des Propylenoxid- / Ethylenoxidgemisches ohne Paralleldosierung von 3-(Glycidoxypropyl)triethoxysilan eindosiert wurden. Nach einer Nachreaktionszeit von 1,33 h wurde der Reaktorinhalt 30 min. bei 85 °C im Vakuum (10 mbar) ausgeheizt, woraufhin 3.013 g IRGANOX^{®} 1076 zugegeben wurden. Das Produkt wies eine Viskosität von 700 mPas bei 25 °C auf.

### Beispiel 7

Zu 121,7 g Butyldiglykol wurden in einen 10-1 Laborautoklaven 0,011 g einer 85 gew.- %igen Phosphorsäure gegeben und 20 min. bei Raumtemperatur verrührt. Danach wurden 1,245 g DMC-Katalysator zugegeben und der Reaktorinhalt bei 80 °C und Rühren mit 450 U/min. 30 min. unter Einleiten von 50 ml Stickstoff pro min. gestrippt. Unter Rühren (450 U/min) wurde auf 130 °C aufgeheizt und der DMC-Katalysator durch Zugabe von 10 g Propylenoxid aktiviert, was sich, nach einem Druckanstieg von 50 mbar auf 1,21 bar, durch einen beschleunigten Druckabfall erkennen ließ. Nach Dosierung weiterer 300 g Propylenoxid (Dosierrate: 907,2 g / h) wurde die Reaktionstemperatur auf 85 °C gesenkt und die Co-Dosierung von 208,4 g 3-(Glycidoxypropyl)triethoxysilan gestartet. Diese wurden gemeinsam mit dem restlichen Propylenoxid (5360,1 g) so eindosiert, dass gegen Ende noch 924 g Propylenoxid ohne Paralleldosierung von 3-(Glycidoxypropyl)triethoxysilan eindosiert wurden. Nach einer Nachreaktionszeit von 1 h wurde der Reaktorinhalt 30 min. bei 85 °C im Vakuum (10 mbar) ausgeheizt, woraufhin 3.001 g IRGANOX^{®} 1076 zugegeben wurden. Das Produkt wies eine Viskosität von 2190 mPas bei 25 °C auf.

### Beispiel 8

Zu 121,5 g Butyldiglykol wurden in einen 10-1 Laborautoklaven 0,014 g einer 85 gew.- %igen Phosphorsäure gegeben und 20 min. bei Raumtemperatur verrührt. Danach wurden 1,205 g DMC-Katalysator zugegeben und der Reaktorinhalt bei 80 °C und Rühren mit 450 U/min. 30 min. unter Einleiten von 50 ml Stickstoff pro min. gestrippt. Unter Rühren (450 U/min) wurde auf 130 °C aufgeheizt und der DMC-Katalysator durch Zugabe von 10 g Propylenoxid aktiviert, was sich, nach einem Druckanstieg von 50 mbar auf 1,10 bar, durch einen beschleunigten Druckabfall erkennen ließ. Nach Dosierung weiterer 300 g Propylenoxid (Dosierrate: 898,3 g / h) wurde die Reaktionstemperatur auf 85 °C gesenkt und die Co-Dosierung von 417,0 g 3-(Glycidoxypropyl)trimethoxysilan gestartet. Diese wurden gemeinsam mit dem restlichen Propylenoxid (5214,6 g) so eindosiert, dass gegen Ende noch 916 g Propylenoxid ohne Paralleldosierung von 3-(Glycidoxypropyl)trimethoxysilan eindosiert wurden. Nach einer Nachreaktionszeit von 2 h wurde der Reaktorinhalt 30 min. bei 85 °C im Vakuum (10 mbar) ausgeheizt, woraufhin 3.037 g IRGANOX^{®} 1076 zugegeben wurden. Das Produkt wies eine Viskosität von 1400 mPas bei 25 °C auf.

### Beispiel 9

Zu 121,4 g Butyldiglykol wurden in einen 10-1 Laborautoklaven 0,014 g einer 85 gew.- %igen Phosphorsäure gegeben und 20 min. bei Raumtemperatur verrührt. Danach wurden 1,220 g DMC-Katalysator zugegeben und der Reaktorinhalt bei 80 °C und Rühren mit 450 U/min. 30 min. unter Einleiten von 50 ml Stickstoff pro min. gestrippt. Unter Rühren (450 U/min) wurde auf 130 °C aufgeheizt und der DMC-Katalysator durch Zugabe von 10 g Propylenoxid aktiviert, was sich, nach einem Druckanstieg von 50 mbar auf 1,10 bar, durch einen beschleunigten Druckabfall erkennen ließ. Nach Dosierung weiterer 200 g Propylenoxid (Dosierrate: 905,7 g / h) wurde die Co-Dosierung von 417,0 g 3-(Glycidoxypropyl)trimethoxysilan gestartet. Diese wurden gemeinsam mit dem restlichen Propylenoxid (5314,5 g) bei 130 °C so eindosiert, dass gegen Ende noch 897 g Propylenoxid ohne Paralleldosierung von 3-(Glycidoxypropyl)trimethoxysilan eindosiert wurden. Nach einer Nachreaktionszeit von 2 h wurde der Reaktorinhalt 30 min. bei 130 °C im Vakuum (10 mbar) ausgeheizt, woraufhin 3.009 g IRGANOX^{®} 1076 zugegeben wurden. Das Produkt wies eine Viskosität von 740 mPas bei 25 °C auf.

### Beispiel 10

Zu 121,6 g Butyldiglykol wurden in einen 10-1 Laborautoklaven 0,011 g einer 85 gew.- %igen Phosphorsäure gegeben und 20 min. bei Raumtemperatur verrührt. Danach wurden 1,237 g DMC-Katalysator zugegeben und der Reaktorinhalt bei 80 °C und Rühren mit 450 U/min. 30 min. unter Einleiten von 50 ml Stickstoff pro min. gestrippt. Unter Rühren (450 U/min) wurde auf 130 °C aufgeheizt und der DMC-Katalysator durch Zugabe von 10 g Propylenoxid aktiviert, was sich, nach einem Druckanstieg von 50 mbar auf 1,10 bar, durch einen beschleunigten Druckabfall erkennen ließ. Nach Dosierung weiterer 300 g Propylenoxid (Dosierrate: 937,8 g / h) wurde die Reaktionstemperatur auf 85 °C gesenkt und die Co-Dosierung von 176,9 g 3-(Glycidoxypropyl)trimethoxysilan gestartet. Diese wurden gemeinsam mit dem restlichen Propylenoxid (5391,8 g) so eindosiert, dass gegen Ende noch 927 g Propylenoxid ohne Paralleldosierung von 3-(Glycidoxypropyl)trimethoxysilan eindosiert wurden. Nach einer Nachreaktionszeit von 1 h wurde der Reaktorinhalt 30 min. bei 85 °C im Vakuum (10 mbar) ausgeheizt, woraufhin 3.021 g IRGANOX^{®} 1076 zugegeben wurden. Das Produkt wies eine Viskosität von 1490 mPas bei 25 °C auf

### Beispiel 11

Zu 121,6 g Butyldiglykol wurden in einen 10-1 Laborautoklaven 0,013 g einer 85 gew.- %igen Phosphorsäure gegeben und 20 min. bei Raumtemperatur verrührt. Danach wurden 1,225 g DMC-Katalysator zugegeben und der Reaktorinhalt bei 80 °C und Rühren mit 450 U/min. 30 min. unter Einleiten von 50 ml Stickstoff pro min. gestrippt. Unter Rühren (450 U/min) wurde auf 130 °C aufgeheizt und der DMC-Katalysator durch Zugabe von 10 g Propylenoxid aktiviert, was sich, nach einem Druckanstieg von 50 mbar auf 1,32 bar, durch einen beschleunigten Druckabfall erkennen ließ. Nach Dosierung weiterer 300 g Propylenoxid (Dosierrate: 934,9 g / h) wurde die Reaktionstemperatur auf 85 °C gesenkt und die Co-Dosierung von 101,1 g 3-(Glycidoxypropyl)trimethoxysilan gestartet. Diese wurden gemeinsam mit dem restlichen Propylenoxid (5467,6 g) so eindosiert, dass gegen Ende noch 980 g Propylenoxid ohne Paralleldosierung von 3-(Glycidoxypropyl)trimethoxysilan eindosiert wurden. Nach einer Nachreaktionszeit von 1 h wurde der Reaktorinhalt 30 min. bei 85 °C im Vakuum (10 mbar) ausgeheizt, woraufhin 3.027 g IRGANOX^{®} 1076 zugegeben wurden. Das Produkt wies eine Viskosität von 1970 mPas bei 25 °C auf.

### Beispiel 12

Zu 122,0 g Butyldiglykol wurden in einen 10-1 Laborautoklaven 0,015 g einer 85 gew.- %igen Phosphorsäure gegeben und 20 min. bei Raumtemperatur verrührt. Danach wurden 1,274 g DMC-Katalysator zugegeben und der Reaktorinhalt bei 80 °C und Rühren mit 450 U/min. 30 min. unter Einleiten von 50 ml Stickstoff pro min. gestrippt. Unter Rühren (450 U/min) wurde auf 130 °C aufgeheizt und der DMC-Katalysator durch Zugabe von 10 g Propylenoxid aktiviert, was sich, nach einem Druckanstieg von 50 mbar auf 0,88 bar, durch einen beschleunigten Druckabfall erkennen ließ. Nach Dosierung weiterer 300 g Propylenoxid (Dosierrate: 963,8 g / h) wurde die Reaktionstemperatur auf 85 °C gesenkt und die Co-Dosierung von 354,0 g 3-(Glycidoxypropyl)trimethoxysilan gestartet. Diese wurden gemeinsam mit dem restlichen Propylenoxid (5106,6 g) so eindosiert, dass gegen Ende noch 981 g Propylenoxid ohne Paralleldosierung von 3-(Glycidoxypropyl)trimethoxysilan eindosiert wurden. Nach einer Nachreaktionszeit von 15 min. wurde wieder auf 130 °C aufgeheizt und 108,0 g Butylenoxid wurden innerhalb von 33 min. eindosiert. Nach einer Nachreaktionszeit von 1 h bei 130 °C wurde der Reaktorinhalt 30 min. im Vakuum (10 mbar) ausgeheizt, woraufhin 3.060 g IRGANOX^{®} 1076 zugegeben wurden. Das Produkt wies eine Viskosität von 930 mPas bei 25 °C auf.

### Beispiel 13

150,0 g Butyldiglykol-Propoxylat mit einer OH-Zahl von 37,3 mg KOH/g wurden in einen 2-1 Laborautoklaven gegeben. Danach wurden 0,28 g DMC-Katalysator zugegeben und der Reaktorinhalt bei 80 °C und Rühren mit 800 U/min. 30 min. unter Einleiten von Stickstoff bei 100 mbar abs. gestrippt. Unter Rühren (1200 U/min) wurde auf 130 °C aufgeheizt und der DMC-Katalysator durch Zugabe von 10 g Propylenoxid aktiviert. Nach Dosierung weiterer 50 g Propylenoxid (Dosierrate: 306 g / h) wurde die Co-Dosierung von 23,6 g 3-(Glycidoxypropyl)trimethoxysilan gestartet. Diese wurden gemeinsam mit dem restlichen Propylenoxid (1166,4 g) so eindosiert, dass gegen Ende noch 308 g Propylenoxid ohne Paralleldosierung von 3-(Glycidoxypropyl)trimethoxysilan eindosiert wurden. Nach einer Nachreaktionszeit von 2 h bei 130 °C wurde der Reaktorinhalt 60 min. bei 130 °C im Vakuum (15 mbar) ausgeheizt, woraufhin 0.7 g IRGANOX^{®} 1076 zugegeben wurden. Das Produkt wies eine Viskosität von 8688 mPas bei 25 °C auf.

### Nachweis der Migrationsneigung

Als Vergleichsbeispiel wurden in einem Dissolver 50 g Desmoseal^{®} S XP 2636 (silanterminiertes Polyurethan, Bayer MaterialScience AG) mit 50 g Jayflex^{®} DINP (Weichmacher, ExxonMobil GmbH) und 0,5 g Lupragen^{®} N 700 (Katalysator, BASF SE) gemischt. Das erfindungsgemäße Beispiel wurde entsprechend durch Mischen von Desmoseal^{®} S XP 2636 mit dem Reaktivverdünner aus Beispiel 1 und Lupragen^{®} N 700 hergestellt. Anschließend wurde die Mischungen jeweils auf einer Teflonplatte ausgegossen und 14 Tage bei Normalbedingungen (23°C / 50% r.Lf.) ausgehärtet.

Filme beider Beispiele wurden in eine Soxhlet Apparatur überführt und 8 Stunden unter Rückfluss mit n-Hexan extrahiert. Der Extraktionsrückstand wurde im Trockenschrank bei 100°C getrocknet und dann ausgewogen. Die folgende Tabelle zeigt die Ergebnisse:

| | **Film mit Reaktivverdünner aus Beispiel 1** | **Film mit DINP als Vergleichsbeispiel** |
|---|---|---|
| Probeneinwaage | 9,9250 g | 10,4942 g |
| Extraktionsrückstand | 2,6793 g | 4,9768 g |
| **Extraktionsrückstand** | **27,0 Gew. %** | **47,4 Gew. %** |

Hier zeigt sich deutlich der Vorteil der erfindungsgemäßen Reaktivverdünner/- weichmacher: Während der Weichmacher des Vergleichsbeispiels fast vollständig extrahiert werden kann, können vom erfindungsgemäßen Beispiel nur in etwa die Hälfte des Reaktivverdünners/-weichmachers extrahiert werden.

### Formulierung einer Fugendichtungsmasse

In einem handelsüblichen Vakuum-Planetendissolver mit Wandabstreifer und Kühlmantel wurden die folgenden Komponenten zu einem gebrauchsfertigen Dichtstoff verarbeitet:

### Stufe 1

| | |
|---|---|
| 18,8 Gew.-Teile | Desmoseal^{®} S XP 2636 (Bayer MaterialScience AG) |
| 23,2 Gew.-Teile | erfindungsgemäßer Reaktivverdünner oder Weichmacher (Vergleichsbeispiele) |
| 51,3 Gew.-Teile | Socal^{®} U1S2 (gefällte Kreide, Solvay GmbH) |
| 3,1 Gew.-Teile | Tronox^{®} 435 (Pigment, Tronox Pigments GmbH) |
| 0,5 Gew.-Teile | Tinuvin^{®} 292 (UV-Absorber, Ciba AG) |
| 0,5 Gew.-Teile | Tinuvin^{®} 1130 (HALS, Ciba AG) |
| 0,3 Gew.-Teile | Irganox^{®} 1135 (Antioxidans, Ciba AG) |
| 1,4 Gew.-Teile | Dynasylan^{®} VTMO (Trocknungsmittel, Evonik AG) |
| 0,1 Gew.-Teile | Lupragen^{®} N 700 (BASF SE) |

Die Stufe 1 der Mischung wurde bei einem Druck von 200 mbar insgesamt 15 Minuten dispergiert, davon 10 Minuten bei n = 3000 min⁻¹ und weitere 5 Minuten bei n = 1000 min⁻¹ unter Kühlung und mit statischem Vakuum. Anschließend erfolgte die Einarbeitung von

### Stufe 2

| | |
|---|---|
| 0,9 Gew.-Teile | Dynasylan^{®} 1189 (Haftvermittler, Evonik AG) |

während 10 Minuten bei n = 1000 min⁻¹ unter Kühlung. Dabei wurde 5 Minuten unter statischem sowie weitere 5 Minuten unter dynamischem Vakuum gefahren.

Das Produkt wurde in eine handelsübliche Polyethylenkartusche abgefüllt und bei Raumtemperatur gelagert.

Nach eintägiger Lagerung wurden aus den Dichtmassen Filme von ca. 2 mm Dicke hergestellt.

Die folgenden mechanischen Eigenschaften wurden nach vierzehntägiger Aushärtung der Filme bei 24°C und 50% relativer Luftfeuchte bestimmt:

| | Vergleichsbeispiel DINP | Vergleichsbeispiel Mesamoll^{®} | Erfindungsgemäßes Beispiel Reaktivverdünner aus Beispiel 1 | Erfindungsgemäßes Beispiel Reaktivverdünner aus Beispiel 4 | Erfindungsgemäßes Beispiel Reaktivverdünner aus Beispiel 7 |
|---|---|---|---|---|---|
| Zugfestigkeit (DIN 53504), [N/mm²] | 3,5 | 3,6 | 3,7 | 3,5 | 3,6 |
| 100%-Modul (DIN 52455/1), [N/mm²] | 0,2 | 0,3 | 0,2 | 0,3 | 0,3 |
| Bruchdehnung (DIN 53504), [%] | 932 | 927 | 1053 | 904 | 915 |
| Shore A-Härte (DIN 53505) | 19 | 24 | 19 | 22 | 23 |
| Klebrigkeit 1/3/7/14d* | 1/1/1/1 | 1/1/1/1 | 1/1/1/1 | 2/1/1/1 | 2/1/1/1 |

| | | | | | |
|---|---|---|---|---|---|
| * Skala von 1-5; 1 = klebfrei, 3 = leichte Oberflächenklebrigkeit, Schmutzteile haften an, 5 = stark klebendes Material, von anhaftendem Material kaum noch zu trennen. | | | | | |

Hier zeigt sich, dass die erfindungsgemäßen Reaktivverdünner/-weichmacher den üblichen unreaktiven Weichmachern vergleichbare oder sogar überlegene mechanische Eigenschaften zeigen.

### Formulierung eines Klebstoffs für Bodenbeläge

In einem handelsüblichen Vakuum-Planetendissolver mit Wandabstreifer und Kühlmantel wurden die folgenden Komponenten zu einem gebrauchsfertigen Klebstoff verarbeitet:

### Stufe 1

| | |
|---|---|
| 26,4 Gew.-Teile | Desmoseal^{®} S XP 2636 (Bayer MaterialScience AG) |
| 13,1 Gew.-Teile | erfindungsgemäßer Reaktivverdünner oder Weichmacher (Vergleichsbeispiele) |
| 55,1 Gew.-Teile | Omyalite^{®} 95T (gefällte Kreide, Omya AG) |
| 0,3 Gew.-Teile | Bayferrox^{®} 415 (Pigment, Lanxess AG) |
| 0,4 Gew.-Teile | Irganox^{®} 1135 (Ciba AG) |
| 0,8 Gew.-Teile | Cab- O- Sil^{®} TS 720 (pyrogene Kieselsäure, Cabot Corp.) |
| 2,3 Gew.-Teile | Dynasylan^{®} VTMO (Evonik AG) |
| 0,1 Gew.-Teile | Lupragen^{®} N 700 (BASF SE) |

Die Stufe 1 der Mischung wurde bei einem Druck von 200 mbar insgesamt 15 Minuten dispergiert, davon 10 Minuten bei n = 3000 min⁻¹ und weitere 5 Minuten bei n = 1000 min⁻¹ unter Kühlung und mit statischem Vakuum. Anschließend erfolgte die Einarbeitung von

### Stufe 2

| | |
|---|---|
| 1,5 Gew.-Teile | Dynasylan^{®} 1146 (Haftvermittler, Evonik AG) |

während 10 Minuten bei n = 1000 min⁻¹ unter Kühlung. Dabei wurde 5 Minuten unter statischem sowie weitere 5 Minuten unter dynamischem Vakuum gefahren.

Das Produkt wurde in eine handelsübliche Polyethylenkartusche abgefüllt und bei Raumtemperatur gelagert.

Nach eintägiger Lagerung wurden aus den Klebstoffen sowohl Filme von ca. 2 mm Dicke, als auch Buche/Buche Probenkörper zur Bestimmung der Längsscherfestigkeit hergestellt.

Die folgenden mechanischen Eigenschaften wurden nach siebentägiger (Längsscherfestigkeit) bzw. vierzehntägiger (Filme) Aushärtung der Proben bei 24°C und 50% relativer Luftfeuchte bestimmt:

| | **Vergleichsbeispiel Mesamoll^{®}** | **Erfindungsgemäßes Beispiel Reaktivverdünner aus Beispiel 1** |
|---|---|---|
| Zugfestigkeit (DIN 53504), [N/mm²] | 3,0 | 3,2 |
| Bruchdehnung (DIN 53504), [%] | 189 | 218 |
| Shore A-Härte (DIN 53505) | 57 | 57 |
| Längsscherfestigkeit 7d (DIN EN 14293), [N/mm²] | 3,3 | 3,1 |
| Klebrigkeit 1/3/7/14 d* | 1/1/1/1 | 1/1/1/1 |
| Ausspritzbarkeit [s/50g] | 34 | 35 |

| | | |
|---|---|---|
| * Skala von 1-5; 1 = klebfrei, 3 = leichte Oberflächenklebrigkeit, Schmutzteile haften an, 5 = stark klebendes Material, von anhaftendem Material kaum noch zu trennen. | | |

Als Ausspritzbarkeit wurde die Zeit bestimmt, die benötigt wurde um 50g Klebstoff mit Hilfe einer pneumatischen Kartuschenpistole bei einem Druck von 2,0 Bar durch eine Kartuschenspitze von 2,4 mm Durchmesser zu pressen.

Die Messwerte zeigen den guten viskositätsreduzierenden Effekt der erfindungsgemäßen Reaktivverdünner/-weichmacher.

### Formulierung eines elastischen Klebstoffs

In einem handelsüblichen Vakuum-Planetendissolver mit Wandabstreifer und Kühlmantel wurden die folgenden Komponenten zu einem gebrauchsfertigen Klebstoff verarbeitet:

### Stufe 1

| | |
|---|---|
| 39,6 Gew.-Teile | Desmoseal^{®} S XP 2458 (silanterminiertes Polyurethan, Bayer MaterialScience AG) |
| 8,6 Gew.-Teile | erfindungsgemäßer Reaktivverdünner oder Weichmacher (Vergleichsbeispiele) |
| 46,0 Gew.-Teile | Socal^{®} U1S2 (Solvay GmbH) |
| 0,1 Gew.-Teile | Schwarzpaste (Lanxess AG) |
| 0,5 Gew.-Teile | Irganox^{®} 1135 (Ciba AG) |
| 1,6 Gew.-Teile | Cab-O-Sil^{®} TS 720 (Cabot Corp.) |
| 2,4 Gew.-Teile | Dynasylan^{®} VTMO (Evonik AG) |
| 0,1 Gew.-Teile | Lupragen^{®} N 700 (BASF SE) |

Die Stufe 1 der Mischung wurde bei einem Druck von 200 mbar insgesamt 15 Minuten dispergiert, davon 10 Minuten bei n = 3000 min⁻¹ und weitere 5 Minuten bei n = 1000 min⁻¹ unter Kühlung und mit statischem Vakuum. Anschließend erfolgte die Einarbeitung von

### Stufe 2

| | |
|---|---|
| 1,1 Gew.-Teile | Dynasylan^{®} 1146 (Evonik AG) |

während 10 Minuten bei n = 1000 min⁻¹ unter Kühlung. Dabei wurde 5 Minuten unter statischem sowie weitere 5 Minuten unter dynamischem Vakuum gefahren.

Das Produkt wurde in eine handelsübliche Polyethylenkartusche abgefüllt und bei Raumtemperatur gelagert.

Nach eintägiger Lagerung wurden aus den Dichtmassen Filme von ca. 2 mm Dicke hergestellt.

Die folgenden mechanischen Eigenschaften wurden nach vierzehntägiger Aushärtung der Filme bei 24°C und 50% relativer Luftfeuchte bestimmt:

| | **Vergleichsbeispiel Mesamoll^{®}** | **Erfindungsgemäßes Beispiel Reaktivverdünner aus Beispiel 1** |
|---|---|---|
| Zugfestigkeit (DIN 53504), [N/mm²] | 3,0 | 3,1 |
| Bruchdehnung (DIN 53504), [%] | 181 | 218 |
| 100%-Modul (DIN 52455/1), [N/mm²] | 2,3 | 2,2 |
| Shore A-Härte (DIN 53505) | 63 | 62 |
| Klebrigkeit 1/3/7/14d* | 1/1/1/1 | 1/1/1/1 |

| | | |
|---|---|---|
| * Skala von 1-5; 1 = klebfrei, 3 = leichte Oberflächenklebrigkeit, Schmutzteile haften an, 5 = stark klebendes Material, von anhaftendem Material kaum noch zu trennen. | | |

## Patentansprüche

1. Verwendung von Mischungen enthaltend Verbindungen der allgemeinen Strukturen I, II, III und IV 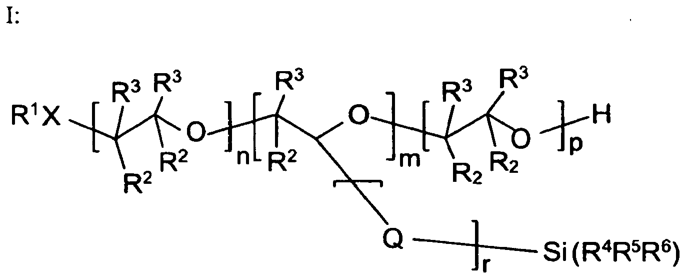 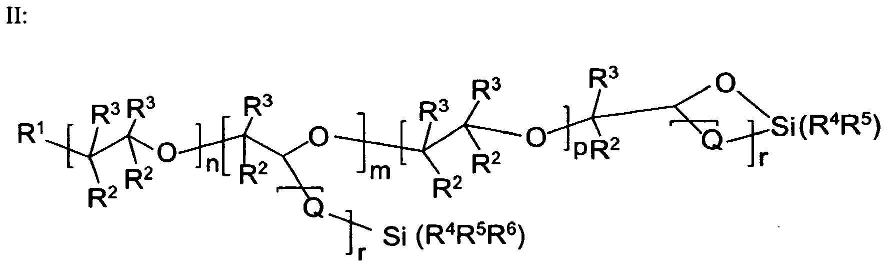 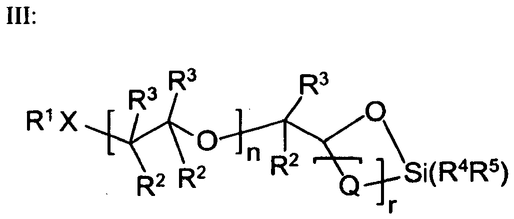 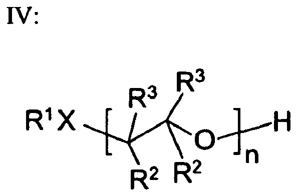 worin
**a)** R¹ ein monofunktionelles Startermolekülradikal wie beispielsweise Methyl, Ethyl, Propyl, Butyl, Cyclohexyl, Phenyl und X ein Heteroatom, bevorzugt Sauerstoff, bedeutet und das Wasserstoffatom in R¹XH ein Zerewitinoffaktives Wasserstoffatom ist,
**b)** R² und R³ unabhängig voneinander für Wasserstoff, für einen C₁-C₄-Alkylrest oder für einen Phenylrest stehen, wobei Wasserstoffatome und/oder Methylgruppen bevorzugt sind und an ein C-Atom gebundene Gruppen R² und R³ gleich oder voneinander verschieden sein können,
**c)** [Q]r eine aus Sauerstoff- und Kohlenstoffatomen aufgebaute Kette der Länge r, mit r = Summe der Kohlenstoff- und Sauerstoffatome, repräsentiert, wobei etwaige freie Valenzen mit Wasserstoffatomen oder Alkylresten abgesättigt sind, aneinander gebundene Sauerstoffatome (Peroxidstrukturen) nicht vorkommen, Silizium an die Kette [Q]r immer über Kohlenstoff gebunden ist, die Kette [Q]r auch vollkommen sauerstofffrei aufgebaut sein kann und r Werte zwischen 1 und 20 annehmen kann,
**d)** R⁴, R⁵ und R⁶ entweder Alkyl oder O-Alkyl bedeuten unter der Voraussetzung, dass in den Strukturen I und II mindestens einer der an dem nichtcyclisch gebundenen Si-Atome befindlichen Reste R⁴, R⁵ und R⁶ ein O-Alkyl ist und in den Strukturen II und III mindestens einer der Reste R⁴ und R⁵ an dem in der cyclischen Endgruppe gebundenen Si-Atom ein O-Alkyl ist,
**e)** p + n in der Struktur I Werte zwischen 5 und 300 und m Werte zwischen 1 und 5 annehmen kann, wobei die m siliziumgruppentragenden Monomereinheiten statistisch zwischen den p + n siliziumgruppenfreien Monomereinheiten verteilt sind,
**f)** p + n in der Struktur II Werte zwischen 5 und 300 und m Werte zwischen 1 und 5 annehmen kann, wobei die m Monomereinheiten mit nichtcyclisch gebundenen Si-Atomen statistisch zwischen den p + n siliziumgruppenfreien Monomereinheiten verteilt sind,
**g)** n in den Strukturen III und IV Werte zwischen 5 und 300 annehmen kann und
**h)** die Strukturen I, II und III jeweils zu mindestens 10 Gew.-% in der Mischung vorliegen,
als Reaktivverdünner oder Reaktivweichmacher in Beschichtungsmitteln, Kleb- oder Dichtstoffen.

## Claims

1. Use of mixtures containing compounds of the general structures I, II, III and IV 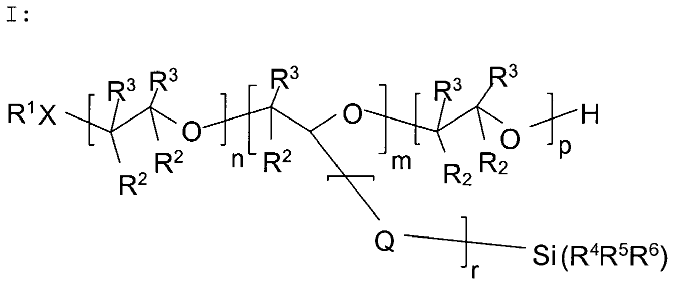 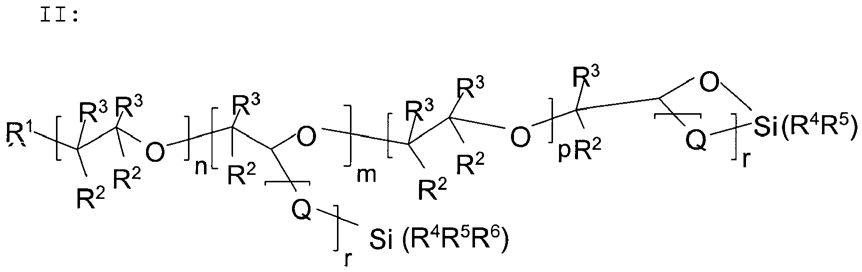 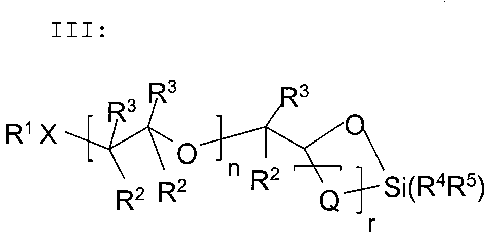 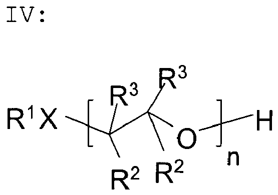 wherein
**a)** R¹ denotes a monofunctional starter molecule radical, such as, for example, methyl, ethyl, propyl, butyl, cyclohexyl, phenyl, and X denotes a hetero atom, preferably oxygen, and the hydrogen atom in R¹XH is a Zerewitinoffactive hydrogen atom,
**b)** R² and R³ independently of each other represent hydrogen, a C₁-C₄-alkyl radical or a phenyl radical, wherein hydrogen atoms and/or methyl groups are preferred and groups R² and R³ bonded to one C atom can be identical or different from one another,
**c)** [Q]ᵣ represents a chain of length r built up from oxygen and carbon atoms, where r = the sum of the carbon and oxygen atoms, wherein any free valencies are satisfied by hydrogen atoms or alkyl radicals, oxygen atoms bonded to one another (peroxide structures) do not occur, silicon is always bonded to the chain [Q]ᵣ via carbon, the chain [Q]ᵣ can also be built up completely without oxygen and r can assume values of between 1 and 20,
**d)** R⁴, R⁵ and R⁶ denote either alkyl or O-alkyl, with the proviso that in the structures I and II at least one of the radicals R⁴, R⁵ and R⁶ on the non-cyclically bonded Si atoms is an O-alkyl and in the structures II and III at least one of the radicals R⁴ and R⁵ on the Si atom bonded in the cyclic end group is an O-alkyl,
**e)** p + n in the structure I can assume values of between 5 and 300 and m can assume values of between 1 and 5, wherein the m monomer units carrying silicon groups are distributed statistically between the p + n monomer units which are free from silicon groups,
**f)** p + n in the structure II can assume values of between 5 and 300 and m can assume values of between 1 and 5, wherein the m monomer units with non-cyclically bonded Si atoms are distributed statistically between the p + n monomer units which are free from silicon groups,
**g)** n in the structures III and IV can assume values of between 5 and 300
and
**h)** the structures I, II and III are each present in the mixture to the extent of at least 10 wt.%,
as reactive diluents or reactive plasticizers in coating compositions, adhesives or sealants.

## Revendications

1. Utilisation de mélanges contenant des composés de structures générales I, II, III et IV 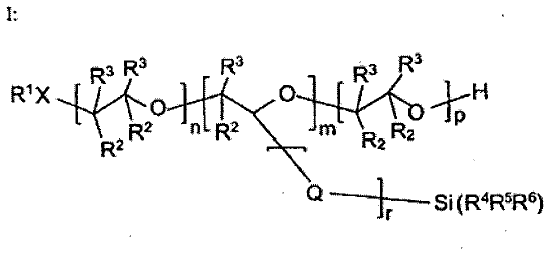 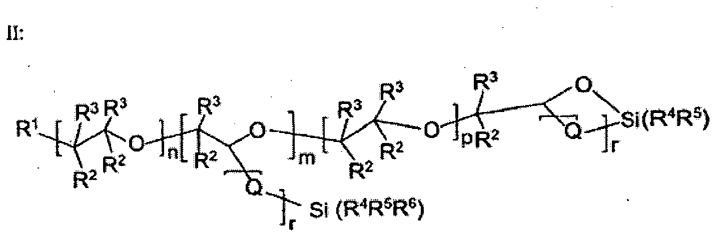 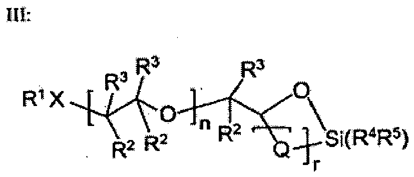 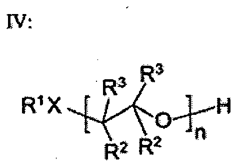 dans lesquelles
**a)** R¹ représente un radical monofonctionnel de molécule de départ comme par exemple méthyle, éthyle, propyle, butyle, cyclohexyle, phényle et X représente un hétéroatome, de préférence un atome d'oxygène, et l'atome d'hydrogène dans R¹XH est un atome d'hydrogène actif selon Zerewitinoff,
**b)** R² et R³ représentent indépendamment l'un de l'autre un atome d'hydrogène, un radical alkyle en C₁-C₄ ou un radical phényle, les atomes d'hydrogène et/ou les groupes méthyle étant préférés et les groupes R² et R³ liés à un atome de carbone pouvant être identiques ou différents l'un de l'autre,
**c)** [Q]ᵣ représente une chaîne constituée d'atomes de carbone et d'oxygène, ayant la longueur r, où r = somme des atomes de carbone et d'oxygène, d'éventuels valences libres étant saturées avec des atomes d'hydrogène ou des radicaux alkyle, des atomes d'oxygène liés entre eux (structures de type peroxyde) n'étant pas présents, le silicium étant toujours lié à la chaîne [Q]ᵣ par un carbone, la chaîne [Q]ᵣ pouvant également avoir une structure totalement exempte d'oxygène et r pouvant prendre des valeurs comprises entre 1 et 20,
**d)** R⁴, R⁵ et R⁶ représentent soit des groupes alkyle, soit des groupes O-alkyle, étant entendu que dans les structures I et II au moins l'un des radicaux R⁴, R⁵ et R⁶ qui se trouvent sur les atomes de silicium non liés dans un cycle est un groupe O-alkyle et dans les structures II et III au moins l'un des radicaux R⁴ et R⁵ sur l'atome de silicium lié dans le groupe terminal cyclique est un groupe O-alkyle,
**e)** p + n dans la structure I peut prendre des valeurs comprises entre 5 et 300 et m peut prendre des valeurs comprises entre 1 et 5, les m motifs monomères portant des groupes contenant du silicium pouvant être répartis statistiquement entre les p + n motifs monomères sans groupes contenant du silicium,
**f)** p + n dans la structure II peut prendre des valeurs comprises entre 5 et 300 et m peut prendre des valeurs comprises entre 1 et 5, les m motifs monomères comportant des atomes de silicium non liés dans un cycle pouvant être répartis statistiquement entre les p + n motifs monomères sans groupes contenant du silicium,
**g)** n dans les structures III et IV peut prendre des valeurs comprises entre 5 et 300 et
**h)** les structures I, II et III sont présentes chacune à raison d'au moins 10 % en poids dans le mélange,
en tant que diluants réactifs ou plastifiants réactifs dans des produits de revêtement, adhésifs ou matières d'étanchéité.
